Europäisches Patentamt

European Patent Office

Office européen des brevets

(19)

(11) Veröffentlichungsnummer: **0 211 240
B1**

(12) **EUROPÄISCHE PATENTSCHRIFT**

(45) Veröffentlichungstag der Patentschrift:
07.03.90

(21) Anmeldenummer: 86109070.2

(22) Anmeldetag: 03.07.86

(51) Int. Cl.⁴: **B01D 47/02, F23J 15/00**

(54) Vorrichtung zur Nassreinigung von Rauchgas.

(30) Priorität: 03.07.85 DE 3523731

(43) Veröffentlichungstag der Anmeldung:
25.02.87 Patentblatt 87/9

(45) Bekanntmachung des Hinweises auf die Patenterteilung:
07.03.90 Patentblatt 90/10

(84) Benannte Vertragsstaaten:
AT BE CH FR GB IT LI NL SE

(56) Entgegenhaltungen:
DE-C- 11 191
US-A- 3 045 990

(73) Patentinhaber: Mauerhoff, Wolfgang R., Am Königsberg 9, D-6239 Eppstein 3(DE)

(72) Erfinder: Mauerhoff, Wolfgang R., Am Königsberg 9, D-6239 Eppstein 3(DE)

(74) Vertreter: Jochem, Bernd, Dipl.-Wirtsch.-Ing., Patentanwälte Beyer & Jochem Postfach 17 01 45, D-6000 Frankfurt/Main(DE)

## Beschreibung

Die Erfindung betrifft eine Vorrichtung zur Naßreinigung von durch einen Rauchgaszug abgeleitetem Rauchgas, bestehend aus einem den Rauchgaszug ringförmig umgebenden, Reinigungsflüssigkeit enthaltenden Becken und einer den Rauchgaszug überdeckenden Haube, deren ringförmiger Rand als Turbulenzeinrichtung ausgebildet ist, die aus mehreren mit Zwischenabstand angeordneten, konzentrischen und senkrechten Lamellen besteht.

Eine derartige Vorrichtung ist aus der DE-C- 11 191 bekannt.

Bei ihr ist die Haube von einem trichterförmigen Schwimmkörper umgeben, unter dessen Boden mit Zwischenabstand konzentrische, senkrecht angeordnete Ringsiebe angeordnet sind. Das aus der Haube austretende Rauchgas steigt in Form von Blasen in der Reinigungsflüssigkeit am trichterförmigen Boden des Schwimmkörpers entlang zur Oberfläche auf und durchquert dabei die treppenartig angeordneten, vollständig in die Reinigungsflüssigkeit eingetauchten Ringsiebe. Die bekannte Vorrichtung hat den Nachteil, daß der Rauchgasstrom den hydrostatischen Druck einer hohen Wassersäule, nämlich in Höhe des trichterförmigen Bodens des Schwimmkörpers, überwinden muß, wozu praktisch immer ein starkes Gebläse erforderlich ist.

Es ist z. B. durch die DE-A- 26 00 407 auch bereits bekannt, Rauchgas mittels eines Gebläses durch eine in einem Becken enthaltene Reinigungsflüssigkeit hindurchzusaugen, indem das Gas gezwungen wird, um die untere Kante eines in die Reinigungsflüssigkeit reichenden Leitblechs herum zu strömen. Die Rauchgasführung ist jedoch so kompliziert und die Anlage entsprechend voluminös, daß sie sich nicht zur Installation auf einem Schornstein, insbesondere nicht auf einem Hausschornstein eignet.

Außerdem ist die Reinigungswirkung unzureichend, da das Rauchgas in verhältnismäßig großen Blasen unter dem einzigen Leitblech durch die Flüssigkeit hindurchströmt.

Weiterhin ist es aus der DE-GM 74 21 406 bekannt, am oberen Ende eines Schornsteins eine Vorrichtung zur Naßreinigung der Rauchgase anzubringen. Sie besteht in diesem Fall aus mehreren radial angeordneten Blechen, von denen jeweils zwei Bleche einen im wesentlichen gleichmäßigen wellenförmigen Rauchgaskanal bilden, an dessen Wänden ein Wasserfilm herabrinnt. Die gewellten Bleche dienen in diesem Fall als nasse Prallbleche, in deren Wasserfilm Feststoffteilchen aufgefangen werden sollen, während das Rauchgas in im wesentlichen laminarer Strömung zwischen den Blechen hindurchgeleitet wird. Dabei kommt ein großer Teil des Gases überhaupt nicht mit der Reinigungsflüssigkeit in Berührung, so daß trotz der scheinbar großen, flüssigkeitsbeaufschlagten Fläche der Stoffaustausch gering bleibt.

Der Erfindung liegt die Aufgabe zugrunde, eine Vorrichtung der eingangs genannten Art zu schaffen, die mit einfachen, nur einen geringen Raum beanspruchenden Mitteln bei sehr geringem Gegendruck eine wirksame Reinigung des Rauchgases gewährleistet.

Vorstehende Aufgabe wird erfindungsgemäß dadurch gelöst, daß die Lamellen nur ein wenig unter die Oberfläche der Reinigungsflüssigkeit reichen und vom Rauchgas unterströmbar sind, und daß mindestens zwei benachbarte, zwischen den Lamellen Strömungskanäle bildende Zwischenräume oberhalb der Oberkanten der Lamellen miteinander verbunden sind.

Die Einfachheit der Vorrichtung beruht im wesentlichen auf der ringförmigen Anordnung des Flüssigkeitsbeckens bei radialer Strömung des Rauchgases durch die Reinigungsflüssigkeit. Da die Turbulenzeinrichtung nur ein wenig bis unter die Flüssigkeitsoberfläche reichen muß, ist der von der Vorrichtung erzeugte Strömungswiderstand gering, so daß es in vielen Fällen keines zusätzlichen Gebläses zur Unterstützung des natürlichen Auftriebs im Schornstein bedarf.

Die gute Reinigungswirkung beruht im wesentlichen darauf, daß mehrere konzentrische Lamellen vorhanden sind, die jeweils ein wenig unter die Flüssigkeitsoberfläche reichen, so daß der größte Teil des Rauchgases gezwungen ist, unter den verschienenen Lamellen hindurch mehrmals durch die Reinigungsflüssigkeit zu tauchen. Dies geschieht in Form einer turbulenten Strömung, die zu einem intensiven Kontakt zwischen dem Gas und der Flüssigkeit führt.

Die der Feinverteilung des Rauchgases in der Reinigungsflüssigkeit dienende ringförmige Turbulenzeinrichtung läßt sich in verschiedenen Ausführungsvarianten realisieren, z. B. derart, daß sie stationär festgehalten ist oder alternativ auf der Flüssigkeitsoberfläche schwimmt. Im letzteren Fall braucht nicht so genau auf die Einhaltung eines ganz bestimmten Flüssigkeitsspiegels im Becken geachtet zu werden.

Die Reinigungsflüssigkeit kann schaumbildende Zusätze enthalten. Vor allem feinblasiger Schaum sorgt für eine große Flüssigkeitsoberfläche und damit gute Reinigungswirkung. Zur intensiven Ausnutzung dieses Effekts sieht die Erfindung in bevorzugter Ausführung vor, daß die Lamellen ziehharmonikaartig mit ringförmig umlaufenden Wellen geformt sind und die Wellenberge benachbarter Lamellen Engstellen der Zwischenräume bilden.

Hierbei können die Zwischenräume zwischen den gewellten Lamellen bei gleicher Höhe sowohl oben als auch unten von radial innen nach radial außen jeweils abwechselnd breite und schmale ringförmige Öffnungen haben. Die mit Erweiterungen abwechselnden Engstellen der Zwischenräume fördern ebenfalls die Turbulenz der Strömung. Außerdem lassen die dadurch erzeugten Druckunterschiede längs der Strömungswege vor allem die größeren Schaumblasen platzen und begünstigen das Entstehen feinblasigen Schaums.

Der bevorzugte Anwendungsbereich der neuen Reinigungsvorrichtung sind Ölheizungen, die in besonderem Maße zur Umweltverschmutzung beitragen. Es versteht sich jedoch, daß die Erfindung bei prinzipiell gleichem Aufbau der Vorrichtung auch zur Reinigung anderer industrieller und Haushaltsabgase geeignet ist, insbesondere wenn diese Ruß und sonstige Feststoffteilchen enthalten. Dabei reichen normalerweise der Schornsteinsog und das Brennergebläse aus, um das Abgas durch die Reinigungsflüssigkeit zu drücken. Sollte es dennoch im Einzelfall zu Störungen des Rauchgasabzugs kommen, können diese leicht durch ein zusätzliches Gebläse am Schornsteinkopf behoben werden, welches in Strömungsrichtung sowohl vor wie auch hinter dem Reinigungsbad angeordnet sein kann. Zum Antrieb des Gebläses kann außer einem Motor auch die Windkraft herangezogen werden.

Eine weitere mögliche Ergänzung des erfindungsgemäßen Abscheiders nutzt die Erwärmung der Reinigungsflüssigkeit durch die Rauchgase aus und sieht vor, daß die Rücklaufleitung, welche die Reinigungsflüssigkeit vom ringförmigen Becken am Schornsteinkopf zu einem größeren Sammelbehälter nach unten leitet, über einen Wärmetauscher, z.B. einer Wärmepumpe, geführt ist. In diesem Fall ist es zweckmäßig, die Rücklaufleitung mit einer Wärmedämmung zu ummanteln und ggf. im Innenraum des Schornsteins zu verlegen.

Der erwähnte Sammelbehälter ist vorzugsweise mit einem Ölschlamm-Abscheider verbunden. Die sich ansammelnden Verunreinigungen, wie z.B. Öl, Ruß, Schwefelsäure usw., sollten nach Möglichkeit durch Recycling zur Wiederverwendung gelangen.

Schließlich eignet sich die Erfindung auch dazu, eine begrenzte Menge Flüssigkeit in vernebelter Form in kurzer Entfernung hinter dem Heizkessel in das heiße Rauchgas zu sprühen. Diese Flüssigkeit wird vom Rauchgas mitgerissen und schlägt sich vor allem am oberen Ende des Schornsteins, an der Haube und in dem ringförmigen Becken mit Reinigungsflüssigkeit nieder. Das an den Schornsteinwänden anfallende Kondensat muß gesondert am unteren Ende des Schornsteins aufgegangen und dem Sammelbehälter zugeführt werden.

Die Erfindung wird nachstehend anhand der Zeichnung näher erläutert. Es zeigen:

Fig. 1 einen senkrechten Schnitt durch einen Hausschornstein mit einer Rauchgas-Reinigungsvorrichtung gemäß der Erfindung;

Fig. 2 einen senkrechten Schnitt durch ein weiteres Ausführungsbeispiel der erfindungsgemäßen Reinigungsvorrichtung;

Fig. 3 einen Teilschnitt durch eine Turbulenzeinrichtung einer Reinigungsvorrichtung nach Fig. 1 oder 2.

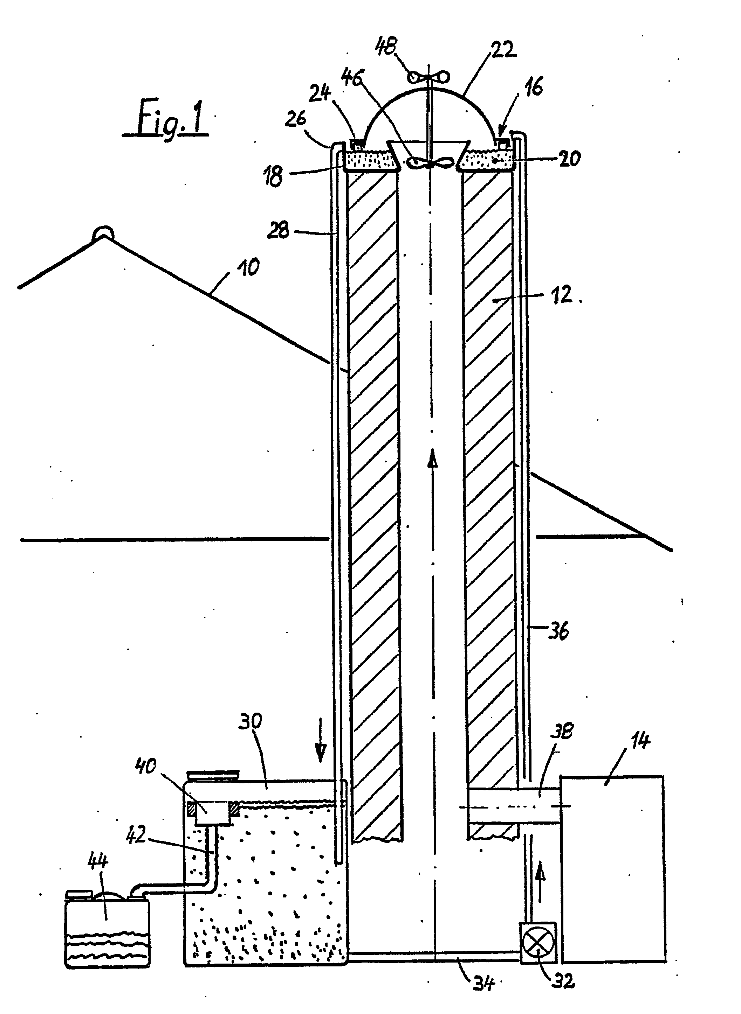

In Fig. 1 ist bei 10 ein Gebäude angedeutet mit einem Schornstein 12. Ein Heizkessel 14 mit Ölbrenner ist unten an den Schornstein 12 angeschlossen. Normalerweise entweichen die Rauchgase des Heizkessels 14 zusammen mit den Verunreinigungen, die sie enthalten, am oberen Ende des Schornsteins ungehindert in die Atmosphäre. Dies soll bei dem gezeigten Schornstein mit der darauf montierten Rauchgas-Reinigungsvorrichtung 16 verhindert werden.

Die Reinigungsvorrichtung 16 besteht im wesentlichen aus einem den Rauchgaszug des Schornsteins 12 ringförmig umgebenden Becken 18 mit einer Reinigungsflüssigkeit 20. Mittels nicht gezeigter Stützen ist an dem Becken 18 eine den Rauchgaszug überdeckende Haube 22 abgestützt. Der untere Rand der Haube 22 ist mit einer Turbulenzeinrichtung 24 versehen, die in die Reinigungsflüssigkeit 20 eintaucht. Der Flüssigkeitsspiegel der Reinigungsflüssigkeit wird durch eine Überlauföffnung 26 bestimmt, die über eine Rücklaufleitung 28 mit einem Sammelbehälter 30 verbunden ist, welcher z.B. im Keller des Gebäudes aufgestellt sein kann. Eine Förderpumpe 32 saugt über einen nicht gezeigten Filter und eine Leitung 34 Flüssigkeit aus dem Sammelbehälter 30 und fördert sie im Kreislauf über eine Zuführleitung 36 wieder in das ringförmige Becken 18. Der dem Sammelbehälter 30 entnommenen Reinigungsflüssigkeit kann, falls gewünscht, saubere Reinigungsflüssigkeit, die aus einem nicht gezeigten Reservoir durch die Pumpe 32 angesaugt wird, beigemischt werden. Außerdem könnte eine Zweigleitung der Zuführleitung 36 über eine Sprühdüse im Rauchgasrohr 38 zwischen dem Heizkessel 14 und dem Schornstein 12 münden, wenn dem Rauchgas schon an dieser Stelle Reinigungsflüssigkeit zugeführt werden soll, die sich dann im Schornstein, an der Haube 22 und in dem Becken 18 niederschlägt und wiedergewonnen wird.

Wie das Ausführungsbeispiel zeigt, handelt es sich um ein offenes Umlaufsystem der Reinigungsflüssigkeit. Das am äußeren Rand offene ringförmige Becken 18 kann mit einem nicht gezeigten Sieb mit Tropfenfang überdeckt sein. Auch der Sammelbehälter 30 ist zur Außenatmosphäre offen. Nicht gezeigte Meßinstrumente zeigen die zunehmende Verschmutzung der Reinigungsflüssigkeit im Sammelbehälter 30 an. Der auf der Oberfläche schwimmende Ölschlamm wird von einem schwimmenden Abscheider 40 über einen flexiblen Schlauch 42 zu einem besonderen Austauschbehälter 44 abgeleitet.

Falls erforderlich, kann der Schornsteinsog verstärkt werden durch ein z.B. an der Haube 22 oder dem Becken 18 gelagertes Gebläse 46, das beispielsweise durch ein Windrad 48 und/oder motorisch angetrieben werden kann. Der durch das Brennergebläse am Heizkessel 14 und den Auftrieb im Schornstein 12 erzeugte Druckunterschied zwischen der Innen- und Außenseite der Haube 22 wird aber normalerweise genügen, um das Rauchgas durch die Reinigungsflüssigkeit unter der Turbulenzeinrichtung 24 hindurch zu drücken. Zur Förderung der Gasströmung kann die Innenwand des ringförmigen Beckens 18 von unten nach oben konisch erweitert sein, wie dies in Fig. 1 gezeigt ist.

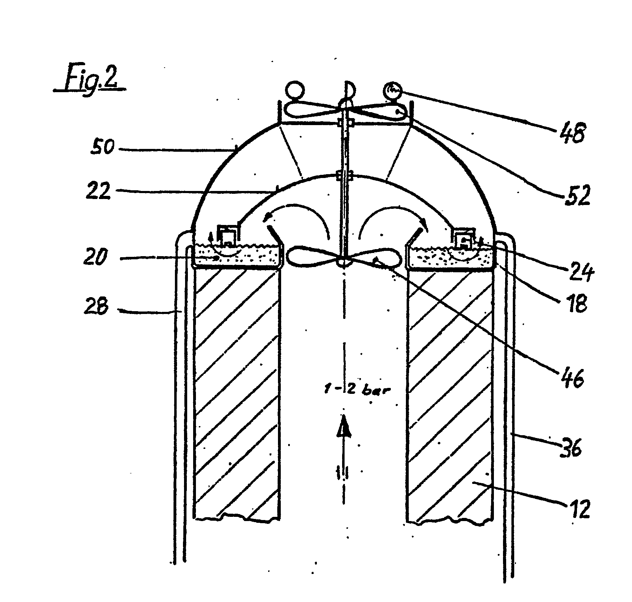

Das Ausführungsbeispiel nach Fig. 2 unterscheidet sich nur dadurch von dem nach Fig. 1, daß der radial äußere Bereich des Beckens 18 und die Haube 22 von einer weiteren Haube 50 überdeckt sind. Letztere hat eine zentrale Auslaßöffnung, in der ein weiteres Gebläserad 52 angeordnet ist, welches gemeinsam mit dem Gebläserad 46 angetrieben werden kann.

Die im Zusammenhang mit Fig. 1 und 2 beschriebenen Vorrichtungen eignen sich auch für Schornsteine mit mehreren nebeneinander angeordneten Rauchgaszügen. Dabei besteht die Möglichkeit, diese von einem gemeinsamen ringförmigen Becken umgeben und einer gemeinsamen Haube überdecken zu lassen. Alternativ kann aber auch jeder der Rauchgaszüge über eine einzelne Vorrichtung nach Fig. 1 verfügen und für alle Rauchgaszüge gemeinsam eine äußere Haube 50 gemäß Fig. 2 vorhanden sein.

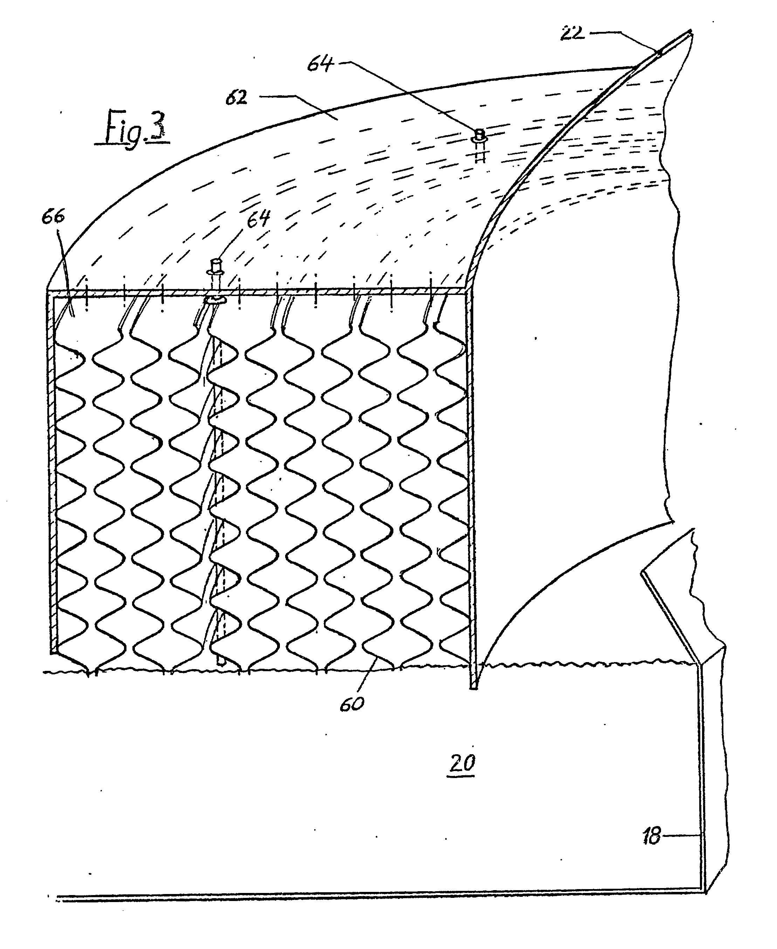

Fig. 3 zeigt einen Teilschnitt durch die Turbulenzeinrichtung 24. Sie ist z.B. fest mit der Haube 22 verbunden, d.h. stationär. Der Flüssigkeitsspiegel ist z.B. durch eine Überlauföffnung entsprechend der im Zusammenhang mit Fig. 1 beschriebenen Überlauföffnung 26 auf ein bestimmtes Niveau eingeregelt, bei welchem die unteren Kanten einer Vielzahl senkrecht angeordneter, gewellter Bleche 60 gerade ein wenig in die Reinigungsflüssigkeit 20 eintauchen. Der Rand der Haube 22 bildet wiederum einen unten offenen umlaufenden Rahmen 62, dessen innerer Hohlraum die gewellten Bleche 60 aufnimmt. Diese sind mittels senkrechter Distanz- und Befestigungsbolzen 64 mit dem gewünschten gegenseitigen radialen Zwischenabstand an dem mit der Haube 22 verbundenen Rahmen 62 befestigt. Wie am besten das mit Bezug auf Fig. 5 ganz links angeordnete gewellte Blech 60 zeigt, befinden sich im montierten Zustand die Oberkanten sämtlicher Bleche in einem bestimmten Abstand unter der Decke des inneren Hohlraums des Rahmens 62, so daß über den Blechen ein freier Hohlraum 66 besteht, der die Zwischenräume zwischen den Blechen 60 miteinander verbindet.

Wie Fig. 3 weiterhin zeigt, liegt das radial innerste gewellte Blech 60 an der radial inneren Wand des Rahmens 62 dicht an. In entsprechender Weise liegt auch das radial äußerste gewellte Blech an der radial äußeren Wand des Rahmens 62 dicht an. Die gewellte Form aller Bleche 60 stimmt überein, und die Anordnung ist so getroffen, daß die Wellen der Bleche im Zwischenraum zwischen benachbarten Blechen von oben nach unten immer abwechselnd Engstellen mit einer lichten Weite von nur wenigen Millimetern und weite Bereiche bilden, deren Durchlaßquerschnitt für eine senkrechte und waagerechte Strömung, z.B. etwa zehnmal so groß ist wie an den Engstellen. Die Zwischenräume zwischen den Blechen haben unten und oben jeweils abwechselnd eine weite und eine enge Öffnung, wobei die Zwischenräume mit einer unteren weiten Öffnung oben eine enge Öffnung haben, und umgekehrt. Die Zwischenräume zwischen den gewellten Blechen 60 bilden senkrechte, ringförmige, konzentrische Strömungskanäle, wobei der radial innerste Strömungskanal unten eine weite und der radial äußerste Strömungskanal unten eine enge Öffnung hat.

Rauchgas, das durch die Druckdifferenz zwischen der Innen- und Außenseite der Haube 22 an der radial inneren Ringwand des Rahmens 62 unter die Flüssigkeitsoberfläche gedrückt wird, steigt in dem unten weit geöffneten Strömungskanal zwischen den beiden radial innersten gewellten Blechen 60 in den oberen Hohlraum 66 auf. Das Gas nimmt dabei Flüssigkeit mit und befeuchtet die Wände der Bleche 60. Wenn die Reinigungsflüssigkeit 20 schaumbildende Zusätze, z.B. Seifenlauge, enthält, füllt sich der Zwischenraum zwischen den Blechen 60 mit Schaumbläschen. Der Wechsel zwischen Engstellen und weiten Bereichen bewirkt eine turbulente Strömung und intensiven Kontakt des Rauchgases mit der großen Flüssigkeitsoberfläche an den gewellten Blechen und den Schaumbläschen.

Ein Teil des Rauchgases strömt auch unter dem radial innersten senkrechten Strömungskanal der gewellten Bleche 60 hinweg radial nach außen. Infolge der mit dem Radius zunehmenden Umfangslänge und des Verlusts an Strömungsenergie verlangsamt sich dabei die radiale Strömungsgeschwindigkeit. Das bedeutet, daß z.B. der in radialer Richtung betrachtet zweite senkrechte Strömungskanal zwischen den gewellten Blechen 60 am unteren Ende einen niedrigeren Druck aufweist als die radial weiter außen liegenden konzentrischen Strömungskanäle. Das Rauchgas und mitgerissene Flüssigkeit, die im radial innersten Strömungskanal bis zum inneren Hohlraum 66 aufgestiegen sind, strömen deshalb im oben weit geöffneten nächsten ringförmigen Strömungskanal wieder nach unten, im dritten konzentrischen Strömungskanal nach oben, dann abermals nach unten usw. Es leuchtet ein, daß man auf diese Weise eine sehr lange turbulente Strömung des Rauchgases durch nasse, mit Bläschen gefüllte Strömungskanäle erhält und damit auch eine sehr gute Reinigungswirkung.

Die gewellten Bleche 60 können aus Metall oder Kunststoff bestehen, wobei abweichend vom gezeichneten Ausführungsbeispiel auch ein auf der Flüssigkeit 20 schwimmendes Blechpaket, das in senkrechter Richtung beweglich im Rahmen 62 geführt ist, in Frage kommt. Die senkrechten Bewegungen des Blechpakets, dessen Bleche im übrigen in gleicher Anordnung wie gemäß Fig. 3 miteinander verbunden sind, erzeugen im oberen Hohlraum 66 eine der turbulenten Strömung förderliche Pumpwirkung.

Als weitere Alternative zu der gezeigten Ausführungsform könnte auch bei jedem ringförmigen Strömungskanal zwischen den gewellten Blechen 60 mit mit oberer weiter Öffnung das mit Bezug auf Fig. 3 linke Blech gegen die Decke des inneren Hohlraums 66 abgedichtet sein. Dann ergibt sich zwangsläufig ein Zickzack-Weg des Rauchgases abwechselnd aufwärts und abwärts durch die konzentrischen Ringkanäle.

Als Reinigungsflüssigkeit 20 kann man Wasser verwenden, dem je nach Anwendungsfall, d.h. je nach dem zu reinigenden Rauchgas, verschiedene Stoffe beigefügt sind. Als Zusätze kommen z.B. Natriumtripolyphosphat zur Förderung der Adhäsion und Isopropanol als Schaumbremsmittel in Frage. Letzteres vergrößert die Zahl und Oberfläche der Schaumbläschen, was sich insbesondere bei der Ausführung nach Fig. 3 günstig auswirkt. Weitere mögliche Zusatzstoffe sind seifenartige Mittel, Flockungsmittel, Enzyme und andere dem Fachmann für die Naßreinigung von Gasen zur Verfügung stehende Stoffe. Grundsätzlich eignet sich die erfindungsgemäße Reinigungsvorrichtung für alle Arten von durch Schornsteine abzuleitenden Abgasen und alle für deren Reinigung jeweils in Frage kommenden Reinigungsflüssigkeiten.

Zusätzlich zu den vorstehend beschriebenen Ausführungsbeispielen sind weitere Abwandlungen möglich. So können z.B. der untere Rand der Haube 22 und die Turbulenzeinrichtung 24 statt eines runden einen quadratischen oder sonstigen polygonalen Querschnitt haben. Vorzugsweise ist wenigstens eine der unter die Oberfläche der Reinigungsflüssigkeit reichenden Kanten der Haube und/oder der Turbulenzeinrichtung gezackt, geschränkt oder gelocht, um die vorbeistreichenden Gase zu verteilen und die Bildung feiner Schaumbläschen zu fördern. Außerdem kann die obere Außenwand dieser oder einer Turbulenzeinrichtung gemäß Fig. 3 mit schlitzähnlichen, ggf. einstellbaren Durchbrüchen versehen sein, um die Schaumbildung noch weiter zu fördern. Es hat sich auch als günstig erwiesen, wenn eine die Turbulenzeinrichtung 24, 60 radial innen begrenzende Ringkante der Haube 22 unter der Oberfläche der Reinigungsflüssigkeit 20 endet und eine die Turbulenzeinrichtung radial außen begrenzende Ringkante der Haube über der Oberfläche der Reinigungsflüssigkeit liegt, wie in Fig. 3 gezeigt.

Damit bei der Schaumbildung ein Überschäumen verhindert wird, ist weiterhin vorgesehen, daß die Ränder des Beckens 18 bis auf etwa 20 cm über der Oberfläche der Reinigungsflüssigkeit hochgezogen sind und das Becken insgesamt durch eine Feinfiltergittermatte abgedeckt ist. Ein Absorbermittel in der Reinigungsflüssigkeit kann dazu dienen, den Ölruß als Ölschlamm abzusenken.

Wie sich bei praktischen Versuchen gezeigt hat, genügt zum Antrieb des Gebläserads 46 ein 12V-Gleichstrommotor. Die Größe der Teile ist unabhängig von den beim Schornsteinbau gebräuchlichen Normen. Selbst ein nachträglicher Einbau bedingt keine sonstigen baulichen Änderungen. Es bestehen auch keine Beschränkungen hinsichtlich der für die neue Vorrichtung zur Anwendung kommenden Materialien, da die Rauchgastemperatur am Schornsteinkopf verhältnismäßig niedrig ist. Es können daher auch Kunststoffe Verwendung finden.

Schließlich sei erwähnt, daß die Vorrichtung auch auf einem Dachboden unter dem Dach aufgestellt werden kann, wenn man den Rauchgaszug des Schornsteins abknickt, das Rauchgas durch die beschriebene Vorrichtung fürt und anschließend wieder in das oberste Ende des Schornsteins zurückleitet.

## Patentansprüche

1. Vorrichtung zur Naßreinigung von durch einen Rauchgaszug abgeleitetem Rauchgas, bestehend aus einem den Rauchgaszug ringförmig umgebenden, Reinigungsflüssigkeit enthaltenden Becken (18) und einer den Rauchgaszug überdeckenden Haube (22), deren ringförmiger Rand als Turbulenzeinrichtung (24) ausgebildet ist, die aus mehreren mit Zwischenabstand angeordneten, konzentrischen und senkrechten Lamellen (60) besteht, dadurch gekennzeichnet, daß die Lamellen nur ein wenig unter die Oberfläche der Reinigungsflüssigkeit (20) reichen und vom Rauchgas unterströmbar sind, und daß mindestens zwei benachbarte, zwischen den Lamellen Strömungskanäle bildende Zwischenräume oberhalb der Oberkanten der Lamellen miteinander verbunden sind.

2. Vorrichtung nach Anspruch 1, dadurch gekennzeichnet, daß die Turbulenzeinrichtung (24) auf der Reinigungsflüssigkeit (20) schwimmt.

3. Vorrichtung nach Anspruch 1 oder 2, dadurch gekennzeichnet, daß wenigstens eine der unter die Oberfläche der Reinigungsflüssigkeit reichenden Kanten der Haube (22) und/oder der Turbulenzeinrichtung (24) gezackt, geschränkt oder gelocht ist.

4. Vorrichtung nach Anspruch 3, dadurch gekennzeichnet, daß die Lamellen (60) ziehharmonikaartig mit ringförmig umlaufenden Wellen geformt sind, wobei die Wellenberge benachbarter Bleche Engstellen der Zwischenräume bilden, und daß die Reinigungsflüssigkeit schaumbildende Zusätze enthält.

5. Vorrichtung nach Anspruch 4, dadurch gekennzeichnet, daß der radial innerste Zwischenraum zwischen den gewellten Lamellen (60) am unteren Ende eine weite und am oberen Ende eine enge Öffnung hat, während der radial äußerste Zwischenraum unten eine enge und oben eine weite Öffnung hat.

6. Vorrichtung nach einem der vorhergehenden Ansprüche, dadurch gekennzeichnet, daß die Turbulenzeinrichtung (24) von einem Tropfenfang umgeben ist.

7. Vorrichtung nach einem der vorhergehenden Ansprüche, dadurch gekennzeichnet, daß das Becken (18) an einen Flüssigkeitszulauf (36) angeschlossen ist und eine obere Überlauföffnung (26) hat, welche mit einem Sammelbehälter (30) verbunden ist.

8. Vorrichtung nach einem der vorhergehenden Ansprüche, dadurch gekennzeichnet, daß an der Haube (22) oder dem Becken (18) ein motorisch und/oder durch Windkraft angetriebenes, den Schornsteinsog unterstützendes Gebläse (46) gelagert ist.

## Claims

1. Apparatus for washing flue gas drawn through a flue gas passage, said apparatus comprising a ring shaped basin (18) surrounding the flue gas passage and containing a cleaning fluid, and a hood (22) covering the flue gas passage and having a ring shaped edge in form of a turbulence creating device (24) consisting of a plurality of spaced, concentric, vertical lamellas (60) characterized in that the lamellas extend only a little bit below the surface of the cleaning fluid (20) and the flue gas can flow beneath the lamellas, and that at least two adjacent hollow spaces being flow passages between the lamellas are interconnected above the upper edges of the lamellas.

2. Apparatus in accordance with claim 1, wherein the turbulence creating device (24) floats on the cleaning fluid (20).

3. Apparatus in accordance with claims 1 or 2, wherein at least one of the edges of the hood (22) extending beneath the surface of the cleaning fluid and/or of the turbulence creating device (24) is indented, ondulated or perforated.

4. Apparatus in accordance with claim 3, wherein the lamellas (60) are of an accordion shape with circumferential corrugations and the crests of the corrugations of adjacent lamellas form constrictions in the hollow spaces between the lamellas, and wherein the cleaning fluid contains foam forming additives.

5. Apparatus in accordance with claim 4, wherein the radially innermost hollow space between the corrugated lamellas (60) has a wide opening at the bottom and a narrow opening at the top whereas the radially outermost hollow space has a narrow opening at the bottom and a wide opening at the top.

6. Apparatus in accordance with one of the foregoing claims, wherein the turbulence creating device is surrounded by a droplets barrier.

7. Apparatus in accordance with one of the foregoing claims, wherein the basin (18) is connected to a fluid feed-line (36) and includes an upper overflow opening (26) which is connected to a collection tank.

8. Apparatus in accordance with one of the foregoing claims, wherein a fan (46) driven by a motor and/or wind for increasing the draft in the flue gas passage is located on the hood (22) or the basin (18).

**Revendications**

1. Dispositif pour le nettoyage par voie humide de fumées évacuées par un conduit de cheminée, dispositif composé d'une cuve (18) annulaire, entourant le conduit de cheminée et contenant le liquide de lavage ainsi qu'une coiffe (22) recouvrant le conduit de cheminée, et dont le bord annulaire est en forme de dispositif créant des turbulences (24), dispositif formé de plusieurs lamelles (60) verticales, concentriques, laissant entre elles des intervalles, dispositif caractérisé en ce que les lamelles n'arrivent que très peu en-dessous de la surface supérieure du liquide de lavage (20) et les fumées peuvent passer sous ces lamelles, et en ce qu'au moins deux intervalles voisins formant des canaux d'écoulement entre les lamelles sont reliés entre eux au-dessus de l'arête supérieure des lamelles.

2. Dispositif selon la revendication 1, caractérisé en ce que le dispositif créant des turbulences (24) flotte sur le liquide de lavage (20).

3. Dispositif selon la revendication 1 ou 2, caractérisé en ce qu'au moins une des arêtes de la coiffe (22) et/ou du dispositif créant des turbulences (24) qui vient sous la surface supérieure du liquide de lavage, est dentelée, ondulée ou perforée.

4. Dispositif selon la revendication 3, caractérisé en ce que les lamelles (60) sont en forme d'accordéon avec les ondes annulaires, les sommets des ondes des lamelles voisines formant les passages étroits des intervalles et en ce que le liquide de lavage contient des additifs moussants.

5. Dispositif selon la revendication 4, caractérisé en ce que l'intervalle radialement le plus à l'intérieur, entre les lamelles ondulées (60), présente, en partie basse, une grande ouverture, et, en partie haute, une ouverture étroite et l'intervalle radialement le plus à l'extérieur présente, en partie basse, une ouverture étroite, et, en partie haute, une grande ouverture.

6. Dispositif selon l'une des revendications précédentes, caractérisé en ce que le dispositif à turbulences (24) est entouré par un chemin à gouttes.

7. Dispositif selon l'une des revendications précédentes, caractérisé en ce que la cuve (18) est reliée à un circuit de liquide (36) et présente un orifice de débordement (26) supérieur qui est relié à un collecteur (30).

8. Dispositif selon l'une des revendications précédentes, caractérisé par une machine soufflante (46) prévue sur la coiffe (22) ou sur la cuve (18), machine soufflante qui est entraînée par un moteur et/ou par le vent pour renforcer le tirage du conduit de cheminée.

Fig.1

_Fig.2_

50

22

20

28

48

52

24

18

46

36

12

1 - 2 bar

Fig.3